# EUROPEAN PATENT SPECIFICATION

(11) **EP 4 349 913 B1**
(45) Date of publication and mention of the grant of the patent: **25.02.2026**
(21) Application number: 22940494.2
(22) Date of filing: 28.12.2022
(51) Int. Cl.: C08L 67/04, C08K 5/20, C08K 5/09, C08K 5/05

(54) **POLYHYDROXYALKANOATE COMPOSITION CONTAINING CRYSTALLIZATION ACCELERATOR, AND MOLDED BODY**
POLYHYDROXYALKANOATZUSAMMENSETZUNG MIT KRISTALLISATIONSBESCHLEUNIGER UND FORMKÖRPER
COMPOSITION DE POLYHYDROXYALCANOATE CONTENANT UN ACCÉLÉRATEUR DE CRISTALLISATION, ET CORPS MOULÉ

(30) Priority: 12.08.2022 CN 202210965103
(43) Date of publication of application: 10.04.2024
(73) Proprietor: Shanghai Bluepha Microbiology Technology Co., Ltd., Shanghai 200072 (CN); Jiangsu Lansu Biomaterial Co., Ltd., Yancheng, Jiangsu 224500 (CN)
(72) Inventor: MA, Zhiyu, Beijing 102206 (CN); MA, Yiming, Beijing 102206 (CN); LI, Teng, Beijing 102206 (CN); ZHANG, Haoqian, Beijing 102206 (CN)
(74) Representative: Stolmár & Partner Patentanwälte PartG mbB
(86) International application number: PCT/CN2022/142865
(87) International publication number: WO 2024/031920

(56) References cited:
- WO-A1-2009/048797
- CN-A- 115 044 180
- JP-A- 2017 222 791
- JP-A- 2020 064 221
- US-A1- 2015 291 771
- US-B2- 8 110 138

## Description

### Technical Field

The present invention relates to the field of biodegradable materials, in particular to a polyhydroxyalkanoate composition comprising a crystallization accelerator and a molded body.

### Background

Biodegradable plastics are a type of plastic that can be degraded by the action of microorganisms present in nature. The ideal biodegradable plastic is non-toxic and harmless after degradation, and has excellent functional performance. However, even if biodegradable materials are difficult to biodegrade in the marine environment, they may cause certain hazards to the environment.

Polyhydroxy fatty acid esters (PHAs) are intracellular polyhydroxy fatty acid esters synthesized by many microorganisms, and are a natural polymer biomaterial. Most monomers of polyhydroxyalkanoate are 3-hydroxy fatty acids with chain length of 3 to 14 carbon atoms, and its side chain R is a highly variable saturated or unsaturated, linear or branched, aliphatic or aromatic group. The diversity of composition and structure brings about performance diversification, making polyhydroxyalkanoate have significant advantages in applications. At the same time, polyhydroxyalkanoates are a polymer derived from biological sources and biodegradable in the marine environment, that can solve the environmental problems caused by waste plastics, and has excellent biocompatibility and mechanical properties. Therefore, polyhydroxyalkanoates can be processed into various molded bodies, such as thin films, straws, tableware and the like. The control of crystallization rate is an important factor in the processing rate of polyhydroxyalkanoate. However, polyhydroxyalkanoates have some disadvantages such as slow crystallization speed, low crystallinity and easy adhesion during processing in the process of preparing various molded bodies through hot processing.

At present, adding nucleating agent and other additives to the composition of molded bodies is a main way to improve the crystallization speed of PHAs. At the same time, in the process of processing various types of molded bodies, after melting and extruding at a temperature near the melting point, it is still necessary to keep the molded bodies at a certain temperature range for a certain time to promote crystallization. For example, a polyhydroxyalkanoate composition for processing with a nucleating agent and a plasticizer, the nucleating agent is selected from the group consisting of talc, micronized mica, calcium carbonate, boron nitride, ammonium chloride, sodium salt, and carboxylate salts of metals in Groups I and II of the Periodic Table of Elements. For another example, the nucleating agent is selected from carbon black, cyanuric acid, uracil, thymine, mica talc, silicon dioxide, boron nitride, barium nitride, clay, calcium carbonate, synthetic silicic acid and salts, metal salts of organic phosphoric acid, and kaolin or the combinations thereof.

US 2015/291771 Aldiscloses additives for PHA based on pentaerythritol and erucamide.

Although adding nucleating agent in the prior art has to some extent shortened the crystallization time, it does not fundamentally reduce the processing difficulty, especially in solving the problem of easy adhesion during processing, which is not conducive to improving the processing efficiency.

### Summary of the Invention

The present invention provides a polyhydroxyalkanoate composition comprising a crystallization accelerator, and a molded body, which are used for solving the defects of slow crystallization speed, low crystallinity and easy adhesion during processing in the processing of polyhydroxyalkanoate molded bodies in the prior art, and realizing a great improvement in processing efficiency.

In a first aspect, the present invention provides a polyhydroxyalkanoate composition containing a crystallization accelerator, which comprises polyhydroxyalkanoate and a crystallization accelerator, wherein the crystallization accelerator is one or more selected from fatty acid amide compounds.

In the prior art, industrial fatty acid amides are mainly used as slip agents, opening agents and antistatic agents for high pressure polyethylene (Low Density Polyethylene, LDPE) thin films, as well as polyvinyl chloride (PVC) calendered films, polypropylene (PP) and casting polypropylene (CPP) thin films; also used as lubricant and releasing agent for ethylene-vinyl acetate copolymer (EVA), polyoxymethylene (POM), polycarbonate (PC), polyethylene terephthalate (PET), polyamide (PA) and other resins.

However, it is found in the research of the present invention that fatty acid amide can be used as a crystallization accelerator of polyhydroxyalkanoate in the process of processing the composition resin of the present invention, and its function is to inhibit the adhesion in the prior art of the molded body with a lower crystallization rate during processing of the polyhydroxyalkanoate molded body, thus providing a certain time guarantee for the crystallization of the molded body and promoting the crystallization and molding of polyhydroxyalkanoate, and at the same time, solving the problem that the polyhydroxyalkanoate resin is adhered to processing equipment parts such as a mold, a press roller, a cutter, a guide roller and the like in the process of processing the polyhydroxyalkanoate molded body in the prior art, and improving the processing efficiency.

A polyhydroxyalkanoate composition comprising the crystallization accelerator is provided according to the present invention, wherein the crystallization accelerator is one or more selected from erucamide, oleamide, linoleamide and palmitamide; the addition amount of the crystallization accelerator is 0.01% to 20% of the mass of the polyhydroxyalkanoate. Further, the addition amount of the crystallization accelerator is 0.1% to 10% of the mass of the polyhydroxyalkanoate. Further, the crystallization accelerator is preferably erucamide.

A polyhydroxyalkanoate composition comprising the crystallization accelerator is provided according to the present invention, wherein the addition amount of the crystallization accelerator is 0.5% to 2% of the mass of the polyhydroxyalkanoate. When the addition amount is less than 0.5%, the effect is not obvious; as the addition amount increases, the odor of the prepared molded body also increases.

According to the research of the present invention, it is found that by controlling the addition ratio of the crystallization accelerator within the above range, the crystallization promotion effect can be better, and the processability of the prepared molded body is also better. For example, the addition amount thereof may be 0.5%, 0.7%, 0.8%, 0.9%, 1%, 1.4%, 1.5%, 1.8%, or 2%.

A polyhydroxyalkanoate composition comprising the crystallization accelerator is provided according to the present invention, wherein the polyhydroxyalkanoate composition further includes a nucleating agent, and the addition amount of the nucleating agent is 0.01% to 20% of the mass of the polyhydroxyalkanoate.

It is found in the research of the present invention that the crystallization accelerator and nucleating agent can be compounded to promote the crystallization of polyhydroxyalkanoate more efficiently.

A polyhydroxyalkanoate composition comprising the crystallization accelerator is provided according to the present invention, wherein in the polyhydroxyalkanoate composition, the nucleating agent is fatty acid and/or fatty alcohol.

The present invention uses nucleating agent which is more suitable for processing different molded bodies on the basis of polyhydroxyalkanoate and crystallization accelerator, and further, the addition amount of the nucleating agent is preferably 0.3% to 10%. For example, the non-limiting addition amount of the nucleating agent can be 0.3%, 0.5%, 1%, 1.5%, 2%, 2.5%, 3%, 3.5%, 4%, 4.5%, 5%, 8%, 9%, or 10%; the composition has the characteristics of high nucleation efficiency and simpler processing mode, and has a wide range of application scenarios.

A polyhydroxyalkanoate composition comprising the crystallization accelerator is provided according to the present invention, wherein the fatty acid is a fatty acid with 5 to 30 carbon atoms, such as valeric acid and decadecanoic acid (decanoic acid/n-decanoic acid); further, the fatty acids with lower melting point compared with the melting temperature of polyhydroxyalkanoate, such as fatty acids comprising terminal carboxyl groups with 8 to 30 carbon atoms are selected; higher fatty acids with 10 or more carbon atoms are further preferred; long-chain high-carbon fatty acids with even number of carbon atoms are preferred, such as lauric acid (dodecanoic acid), myristic acid (tetradecanoic acid), palmitic acid (hexadecanoic acid), stearic acid (octadecanoic acid), arachidic acid (eicosanoic acid), behenic acid (docosanoic acid), tetracosanoic acid (Lignoceric acid), cerotic acid (hexacosanic acid), montanic acid (octacosanoic acid) and melissic acid (triacontanoic acid), without limitation; and more preferably, behenic acid.

A polyhydroxyalkanoate composition comprising the crystallization accelerator is provided according to the present invention, wherein the fatty alcohol is a fatty alcohol with 5 to 32 carbon atoms, such as pentanol, C8 alcohol and the like; further, fatty alcohols with lower melting point compared with the melting temperature of polyhydroxyalkanoate, such as fatty alcohols containing terminal hydroxyl groups with 8 to 30 carbon atoms are selected; high fatty alcohols with 10 or more carbon atoms are further preferred; long-chain high-carbon fatty alcohols with even number of carbon atoms are preferred, specifically, such as, but not limited to, one or more of 1,16-hexadecanediol, stearic glycol (1,2-octadecanediol), 1,22-docosanediol, lauryl alcohol (dodecanol), myristyl alcohol (tetradecanol), palmityl alcohol (hexadecanol), arachidyl alcohol (eicosanol), behenyl alcohol (docosanol), ceryl alcohol (hexacosyl alcohol), policosanol (montanyl alcohol), triacontanol (myricyl alcohol) and dotriacontanol (lacceryl alcohol); and more preferably, behenyl alcohol. The chemical activity and water solubility of the fatty alcohol described in the present invention are lower than the other alcohol substances, for example, lower than the chemical activity and water solubility of polyhydroxy sugar alcohol substances, and the fatty alcohol described in the present invention has wider sources, lower cost and safer storage and processing, and can effectively promote the crystallization of polyhydroxyalkanoate after being compounded with the crystallization accelerator described in the present invention, and at the same time can effectively reduce the processing difficulty.

Further, in the polyhydroxyalkanoate composition, the nucleating agent is one or more of lauric acid, myristic acid, palmitic acid, stearic acid, arachidic acid, behenic acid, tetracosanoic acid, cerotic acid, octacosanoic acid, melissic acid, 1,16-hexadecanediol, stearic glycol, 1,22-docosanediol, lauryl alcohol, myristic alcohol, palmityl alcohol, arachidyl alcohol, behenyl alcohol, ceryl alcohol, octacosanol, myricyl alcohol and dotriacontanol.

The polyhydroxyalkanoate composition described in the present invention consists of polyhydroxyalkanoate, erucamide and fatty acid. Among them, the addition amount of erucamide is 0.5% to 2% of the mass of polyhydroxyalkanoate, and the addition amount of fatty acid is 0.3% to 5% of the mass of polyhydroxyalkanoate. In one specific embodiment of the present invention, the fatty acid is behenic acid.

The polyhydroxyalkanoate composition described in the present invention consists of polyhydroxyalkanoate, erucamide and fatty alcohol. Among them, the addition amount of erucamide is 0.5% to 2% of the mass of polyhydroxyalkanoate, and the addition amount of fatty alcohol is 0.3% to 5% of the mass of polyhydroxyalkanoate. In another specific embodiment of the present invention, the fatty alcohol is behenyl alcohol.

The polyhydroxyalkanoate composition described in the present invention consists of polyhydroxyalkanoate, erucamide, fatty acid and fatty alcohol. Among them, the addition amount of erucamide is 0.5% to 2% of the mass of polyhydroxyalkanoate, and the sum of the addition amounts of fatty acid and fatty alcohol is 0.3% to 5% of the mass of polyhydroxyalkanoate; in yet another specific embodiment of the present invention, the fatty acid in the nucleating agent is behenic acid, and the fatty alcohol is behenyl alcohol.

It has been shown that the above combination of conditions results in better crystallization and better processability of the prepared molded body.

A polyhydroxyalkanoate composition comprising the crystallization accelerator is provided according to the present invention, wherein the polyhydroxyalkanoate is a single polymer or a composition of two or more polymers.

Further, the polyhydroxyalkanoate can be selected from the raw materials commonly used in this field, which are polymers containing structural units represented by the following general formula (1):

[CHRCH₂COO] (1)

In general formula (1), R represents an alkyl group represented by CₚH₂ₚ₊₁, and p represents an integer from 1 to 15; preferably an integer of 1 to 10, more preferably an integer of 1 to 8.

Preferably, R represents a C1-C6 linear or branched alkyl group. For example, methyl, ethyl, propyl, butyl, isobutyl, tert-butyl, pentyl, hexyl and the like.

Specifically, for example, polymers containing 3-hydroxyalkanoate structural units and/or containing 4-hydroxyalkanoate structural units.

When the polyhydroxyalkanoate is a composition of two or more polymers, the polyhydroxyalkanoate includes at least one poly (3-hydroxyalkanoate). Further, the poly (3-hydroxyalkanoate) only contains a 3-hydroxybutyrate structural unit (hereinafter sometimes referred to as 3HB), or contains a 3-hydroxybutyrate structural unit and other hydroxyalkanoate structural units, wherein the other hydroxyalkanoate structural units are selected from 3-hydroxypropionate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate and 4-hydroxybutyrate.

When the poly(3-hydroxyalkanoate) contains 3-hydroxybutyrate structural units and other hydroxyalkanoate structural units, the average content ratio of the 3-hydroxybutyrate structural units to other hydroxyalkanoate structural units is 50/50-99/1 (mol%/mol%); and preferably 80/20-94/6 (mol%/mol%); in the case where the raw material of polyhydroxyalkanoate is a mixture of two or more polyhydroxyalkanoates, the average content ratio refers to the molar ratio of each monomer contained in the whole mixture.

As specific examples of polyhydroxyalkanoate, examples may be exemplified such as poly(3-hydroxybutyrate), poly(3-hydroxybutyrate-co-3-hydroxypropionate), poly(3-hydroxybutyrate-co-3-hydroxyvalerate) (abbreviated as P3HB3HV, hereinafter referred to as PHBV), poly(3-hydroxybutyrate-co-3-hydroxyvalerate-co-3-hydroxycaproate) (abbreviated as P3HB3HV3HH), poly(3-hydroxybutyrate-co-3-hydroxyhexanoate) (abbreviated as P3HB3HH, hereinafter referred to as PHBH), poly(3-hydroxybutyrate-co-3-hydroxyheptanoate), poly(3-hydroxybutyrate-co-3-hydroxyoctanoate) (abbreviated as PHBO), poly(3-hydroxybutyrate-co-3-hydroxynonanoate), poly(3-hydroxybutyrate-co-3-hydroxydecanoate), poly(3-hydroxybutyrate-co-3-hydroxyundecanoate) and poly(3-hydroxybutyrate-co-4-hydroxybutyrate) (abbreviated as P3HB34HB, hereinafter referred to as P34HB), and the like. In particular, from the viewpoint of processability and mechanical properties, poly(3-hydroxybutyrate-co-3-hydroxyhexanoate) is preferred.

The polyhydroxyalkanoate is particularly preferably polyhydroxyalkanoate produced by microorganisms. In polyhydroxyalkanoate produced by microorganisms, all structural units contained in 3-hydroxyalkanoate are in the form of (R)3-hydroxyalkanoate structural units.

Further, the weight average molecular weight of the polyhydroxyalkanoate is 100,000 to 1 million; preferably 200,000 to 900,000; further preferably 300,000 to 800,000. When the weight average molecular weight is less than 100,000, there is a tendency that the mechanical properties of the obtained polyhydroxyalkanoate resin molded body become lower. On the other hand, when the weight average molecular weight exceeds 1 million, there is a tendency that the load on machinery during melt processing becomes higher and productivity becomes lower.

In a second aspect, the present invention provides a polyhydroxyalkanoate molded body, which is prepared from raw materials including the above-mentioned polyhydroxyalkanoate composition.

The polyhydroxyalkanoate molded body obtained by the present invention has the advantages of high crystallization rate and good mechanical properties, and thus has wider application scenarios.

In addition, without inhibiting the effect of the present invention, additives and other auxiliaries can be added to compound with the composition according to the production needs of the molded body. The additives may include organic or inorganic materials such as plasticizers, crosslinking agents, chain extenders and lubricants. Organic or inorganic materials can be used alone or in combination of two or more.

In addition, the addition amount of additives can be adjusted according to production needs, and the present invention is not particularly limited thereto.

The polyhydroxyalkanoate molded body of the present invention can be prepared by various thermal processing molding methods such as extrusion molding, injection molding, calendering molding, tape casting, blow molding, biaxial stretching molding and the like, and can also be prepared by non-thermal processing molding methods such as solution casting. It is preferred to be prepared by thermal processing molding methods. The polyhydroxyalkanoate molded body of the present invention can include various forms, such as pellets, thin films, straws, injection molded parts and the like.

Further, the preparation method of the polyhydroxyalkanoate molded body includes the following steps:
Heating and melting at a first temperature; cooling and molding at a second temperature from the glass transition temperature to the melting point temperature of the molded body.

The lower the first temperature, the shorter the time required for the molded body not to adhere at the second temperature; and the higher the first temperature, the higher the fluidity of polyhydroxyalkanoate, which is beneficial to molding. Preferably, the first temperature is 60°C or higher than the melting point of polyhydroxyalkanoate.

At present, it is known that the second temperature affects the time required for the polyhydroxyalkanoate molded body to reach a state where no adhesion occurs, especially the second temperature is often set from the glass transition temperature to the melting point temperature of the molded body, for example, at a temperature 30°C or more above the glass transition temperature of the molded body and 20°C or more below the melting point temperature of the molded body. Alternatively, the second temperature range is often specifically 40-65°C. However, it has been found that the composition of the present invention comprising crystallization accelerator and nucleating agent does not need to set a second temperature in the production process, that is, it does not need to set a certain temperature after extrusion, and a molded body with a better molded state, such as a thin film prepared by blowing into film, can be obtained at a room temperature (RT) (generally, the room temperature referred to here is 20-30°C, with the maximum not exceeding 40°C, and typically it can be 20°C, 25°C, 30°C and 35°C without limitation). Especially in the process of mass production, it can not only improve the processing efficiency, but also reduce the production energy consumption.

The present invention provides a polyhydroxyalkanoate composition comprising a crystallization accelerator and a polyhydroxyalkanoate molded body. By selecting fatty acid amide as the crystallization accelerator of polyhydroxyalkanoate, a certain time guarantee is provided for the crystallization of the molded body, and the crystallization molding of polyhydroxyalkanoate is promoted. At the same time, the problem that polyhydroxyalkanoate is easily adhered to processing equipment parts such as a mold, a press roller, a cutter, a guide roller and the like in the process of processing the polyhydroxyalkanoate molded body is solved, and the processing efficiency is improved.

The crystallization accelerator of the present invention has wide sources and low product price, which reduces the raw material cost of various molded bodies; meanwhile, the nucleating agent provided by the present invention is of biological origin, which does not affect the biological carbon proportion of the polyhydroxyalkanoate molded body, and it can still reach 100% biological origin. The polyhydroxyalkanoate composition provided by the present invention uses nucleating agents which are more suitable for processing different molded bodies, and the composition has the characteristics of high nucleating efficiency and simpler processing mode, and has wide range of application scenarios.

Other features and advantages of the present invention will be described in detail in the following detailed description.

### Description of Embodiments

In order to make the purpose, technical solutions and advantages of the present invention more clear, the technical solutions of the present invention will be described clearly and completely below. Obviously, the described Examples are part of the Examples of the present invention, but not all of them. Based on the Examples in the present invention, all other examples obtained by a person skilled in the art without creative work belong to the protection scope of the present invention.

The endpoints and any values of the ranges disclosed herein are not limited to the exact range or value, and these ranges or values should be understood to include values close to these ranges or values. For numerical ranges, one or more new numerical ranges can be obtained by combining the endpoint values of various ranges, endpoint values of various ranges and individual point values, and individual point values, and these numerical ranges should be regarded as specifically disclosed herein.

All raw materials used in the following Examples and Comparative Examples are commercially available unless otherwise specified.

### The following raw materials are used:

PHBH-330: poly(3-hydroxybutyrate-co-3-hydroxycaproate), brand name: BP330, with the content of 3HB(3-hydroxybutyrate unit) of 94% and the weight average molecular weight of about 100,000-800,000, Beijing Bluepha Microbiology Technology Co., Ltd.

PHBH-350: poly(3-hydroxybutyrate-co-3-hydroxycaproate), brand name: BP350, with the content of 3HB(3-hydroxybutyrate unit) of 89% and the weight average molecular weight of about 100,000-800,000, Beijing Bluepha Microbiology Technology Co., Ltd.

Poly(3-hydroxybutyrate-co-3-hydroxyvalerate) (PHBV), with a weight average molecular weight of about 300,000-800,000, Beijing Bluepha Microbiology Technology Co., Ltd.

Poly(3-hydroxybutyrate-co-4-hydroxybutyrate) (P34HB), with a weight average molecular weight of about 300,000-800,000, Beijing Bluepha Microbiology Technology Co., Ltd.

Poly(3-hydroxybutyrate-co-3-hydroxyoctanoate) (PHBO), with a weight average molecular weight of about 300,000-800,000, Beijing Bluepha Microbiology Technology Co., Ltd.

Poly(3-hydroxybutyrate-3-hydroxyvalerate-3-hydroxyhexanoate) (P3HB3HV3HH), with a weight average molecular weight of about 300,000-800,000, Beijing Bluepha Microbiology Technology Co., Ltd.

### Performance evaluation methods of polyhydroxyalkanoate molded bodies:

Degree of crystallinity:
A DSC curve was obtained by measuring 2 to 10 mg of a polyhydroxyalkanoate molded body, and raising the temperature from -50°C to 180°C in a single step at an elevating rate of 10°C/minute using a differential scanning calorimeter (DSC25, TA Instruments). The greater the degree of crystallinity, the higher the crystallinity of the molded body, which is more conducive to subsequent processing and molding.
Degree of crystallinity (%)=100%×(enthalpy of melting-enthalpy of cold crystallization) /100% enthalpy of crystallization melting; wherein the 100% enthalpy of crystallization melting is 147.4 J/g.

Half-peak width of secondary heating cold crystallization:
A second heating DSC curve was obtained by measuring 2 to 10 mg of a polyhydroxyalkanoate molded body, and raising the temperature from -50°C to 180°C at an elevating rate of 10°C/minute, holding at 180°C for 3 min, and then cooling down from 180°C to -50°C at a cooling rate of 10°C/min, and then secondary raising from -50°C to 180°C at an elevating rate of 10°C/min using a differential scanning calorimeter (DSC25, TA Instruments). In the case of cold crystallization peak, the smaller the half-peak width data of secondary heating cold crystallization, the easier it is for the molded body to crystallize and harden during processing, which is more conducive to processing and molding.

The polyhydroxyalkanoate molded body is prepared into a test piece meeting the corresponding standard requirements by an injection molding machine:
The melt flow rate was measured at 190°C and 2.16 kg according to ISO1133-1:2011.

The tensile strength and elongation at break were measured at a test speed of 5 mm/min according to ISO527-2-2012.

The unit of melt flow rate is g/10 min, the unit of tensile strength is MPa and the unit of elongation at break is %.

The symbols indicating the difficulty of molded bodies/pellets are explained as below:
oo: Continuous and stable processing is possible, and there is no adhesion between molded bodies/pellets; at the same time, there is no need to use a second temperature to promote crystallization, and it is sufficient to use RT crystallization;
○: Continuous and stable processing is possible, and there is no adhesion between molded bodies/pellets;
△: Extrusion is stable during thermoplastic processing, and molded bodies/pellets or extruded strips will adhere together, but can be separated by vibration after a period of time;
□: Extrusion is stable during thermoplastic processing, and molded bodies/pellets or extruded strips will adhere together, but a small amount of molded bodies/pellets will still adhere together after a period of time;
×: Extrusion is unstable during extrusion, and the molded bodies/pellets adhere together and cannot be separated.

### Testing of thin film molded bodies:

The thin film molded body was tested according to ISO527-2-2012, and the longitudinal tensile strength and elongation at break were measured at a test speed of 500 mm/min. The unit of longitudinal tensile strength of the thin film is MPa, and the unit of longitudinal elongation at break of the thin film is %.

### Examples:

Provided in the present Example was a polyhydroxyalkanoate composition comprising a crystallization accelerator, which comprises polyhydroxyalkanoate and a crystallization accelerator, wherein the crystallization accelerator is one or more of fatty acid amide compounds; in the present Example, the polyhydroxyalkanoate is one or a combination of PHBH-BP330, PHBH-BP350, PHBV, P34HB, PHBO and P3HB3HV3HH; and the crystallization accelerator is one or a combination of erucamide, oleamide, linoleamide and palmitamide.

In order to further improve the processing efficiency, a nucleating agent was added to the polyhydroxyalkanoate composition in the present Example, wherein the nucleating agent is fatty acid and/or fatty alcohol. In the present Example, one or a combination of valeric acid, decanoic acid, behenic acid, tetracosanoic acid, cerotic acid, stearic acid, pentanol, C8 alcohol, docosanol, octadecyl alcohol and dodecanol was used.

The following specifically provides a preparation method of a polyhydroxyalkanoate composition, including preparing polyhydroxyalkanoate composition pellets and thin films:

### 1. Preparation of pellets of polyhydroxyalkanoate compositions

The polyhydroxyalkanoate compositions provided in Examples 1-15 were prepared into polyhydroxyalkanoate molded bodies (pellets), and the preparation method was as follows:
The polyhydroxyalkanoate composition was placed in a high-speed mixer at RT and co-mixed for 3 to 10 min using a speed of 100 to 600 r/min;
The mixed material was placed in the discharge hopper or loss-in-weight feeder of a twinscrew extruder (JSH-65, Nanjing Mianya Machinery Manufacturing Co. Ltd.); the temperature of the extrusion pelletizing equipment was set within the range of 50-180°C, the rotating speed of the main engine was 50 to 600 r/min, and the feeding amount or capacity was to be adjusted according to the actual production state; subsequently, pelletization was carried out by way of pelletizing using air-cooled strand pelletizing, water bath strand pelletizing, grinding and hot cutting, water ring cutting or underwater pelletizing; and in the process of production and processing to maintain the water bath condition of 40-65°C (i.e., the second temperature of pelletization); the prepared pellets were dried using a blast drying oven to eliminate the influence of moisture on the properties of the pellets and at the same time to crystallize the pellets completely.

The polyhydroxyalkanoate compositions provided in Comparative Examples 1 to 4 (only polyhydroxyalkanoate in Comparative Example 1) were prepared into polyhydroxyalkanoate molded bodies (pellets), and the preparation method was as follows:
The polyhydroxyalkanoate composition (only polyhydroxyalkanoate in Comparative Example 1) was placed in a high-speed mixer at RT and co-mixed for 3 to 10 min using a speed of 100 to 600 r/min;
The mixed material was placed in the discharge hopper or loss-in-weight feeder of a twinscrew extruder (JSH-65, Nanjing Mianya Machinery Manufacturing Co. Ltd.); the temperature of the extrusion pelletization equipment was set within the range of 50-180°C, the rotating speed of the main engine was 50 to 600 r/min, and the feeding amount or capacity was to be adjusted according to the actual production state; subsequently, pelletization was carried out by way of pelletizing using air-cooled strand pelletizing, water bath strand pelletizing, grinding and hot cutting, water ring cutting or underwater pelletizing; and in the process of production and processing to maintain the water bath condition of 45°C (i.e., the second temperature of pelletization is 45°C); the prepared pellets were dried using a blast drying oven to eliminate the influence of moisture on the properties of the pellets and at the same time to crystallize the pellets completely.

Specific process parameters and physical properties parameters of the obtained pellets were shown in Tables 1-1, 1-2 and 1-3.

In order to solve the defects of slow crystallization speed, low degree of crystallinity and easy adhesion during processing of polyhydroxyalkanoate molded bodies, the research of the present invention found that adding fatty acid amide compounds into polyhydroxyalkanoate helps to promote crystallization, as shown in Table 1-1, in which erucamide, oleamide, linoleamide and palmitamide were added into the compositions of Examples 1-7 respectively. The present invention also found that, unlike fatty acid amide compounds routinely used as a slip agent, the fatty acid amide compounds play a role in promoting nucleation in polyhydroxyalkanoate, and can obviously reduce the processing difficulty of molded bodies (pellets). However, the polyhydroxyalkanoate without fatty acid amide compounds is difficult to mold during processing and preparation, as shown in Comparative Example 1 in Table 1-3.

As for the addition amount of fatty acid amide for promoting crystallization, the present invention found that the addition amount of crystallization accelerator is 0.01% to 20% of the mass of polyhydroxyalkanoate, which can meet the range of common production requirements. In addition, possibly, the amount of fatty acid amide can also be increased when other additives are added to absorb or reduce the odor caused by fatty acid amide. When the addition amount is too small, it cannot obviously promote crystallization, while when the addition amount is too large, it results in a larger smell of the processed molded body. Further, the optional addition amount was 0.5% to 2% of polyhydroxyalkanoate. As shown in Comparative Example 2 in Table 1-3, if the addition amount is less than 0.5%, the effect on improving the difficulty of molding and processing is smaller than that of Examples 1-15. As the addition amount increases, the odor of the prepared molded body also increases. For example, when the addition amount is greater than 2%, the odor is greater than that of Examples 1-15 (as shown in Comparative Example 3 in Table 1-3).

In order to further investigate whether other additives with similar functions commonly used in this field, such as slip agent, have the same effect, as shown in Comparative Example 4 in Table 1-3, silicon dioxide commonly used in this field is used, and it is clearly seen that it plays a smaller role in improving the difficulty of molding and processing.

**Table 1-1**

| Composition | Examples | | | | | | |
|---|---|---|---|---|---|---|---|
| | 1 | 2 | 3 | 4 | 5 | 6 | 7 |
| PHBH-BP350 | 100 | 100 | 100 | 100 | 100 | 100 | 100 |
| Erucamide | 0.5 | 1 | 2 | 1.5 | | | |
| Oleamide | | | | | 2 | | |
| Linoleamide | | | | | | 1.5 | |
| Palmitamide | | | | | | | 1.5 |

| Process Parameters | | | | | | | |
|---|---|---|---|---|---|---|---|
| The second temperature of pelletization (°C) | 45 | 50 | 60 | 55 | 45 | 48 | 50 |

| Physical Properties Parameters | | | | | | | |
|---|---|---|---|---|---|---|---|
| Difficulty in processing molded bodies (pellets) | □ | △ | △ | △ | △ | △ | △ |
| Degree of crystallinity (%) | 1.33 | 2.62 | 4.68 | 4.01 | 4.12 | 3.87 | 3.89 |
| Half-peak width of secondary heating cold crystallization (°C) | 20.71 | 16.46 | 15.34 | 15.00 | 18.41 | 17.14 | 16.14 |
| Melt flow rate (g/10min) | 5.13 | 4.14 | 6.13 | 5.39 | 6.44 | 5.12 | 5.76 |
| Tensile strength (Mpa) | 22.3 | 22.6 | 22.1 | 23.4 | 23.0 | 22.6 | 22.5 |
| Elongation at break (%) | 13 | 34 | 23 | 31 | 21 | 17 | 15 |

For the polyhydroxyalkanoate in the polyhydroxyalkanoate composition, a single polyhydroxyalkanoate is used in this example, such as PHBH-BP 350 provided by Examples 1-7 in Table 1-1; other pure materials are also used, such as PHBH-BP330 provided by Example 10 and PHBV provided by Example 11 in Table 1-2; by adding fatty acid amide therein, crystallization can be promoted, the degree of crystallinity can be improved to a certain extent and the processing difficulty of molded bodies (pellets) can be significantly reduced.

In addition to the above pure materials, mixed polyhydroxyalkanoates were also used, such as the mixture of PHBH-BP330 and PHBH-BP350 provided by Example 8-9 in Table 1-2, the mixture of PHBV, P34HB and P3HB3HV3HH provided by Example 12, the mixture of PHBH-BP350 and PHBV provided by Example 13, the mixture of P34HB and PHBO provided by Example 14 and the mixture of PHBH-BP350, P34HB and PHBO provided by Example 15. By adding fatty acid amide therein, crystallization can also be promoted, the degree of crystallinity can be improved to a certain extent, and the processing difficulty of molded bodies (pellets) can also be significantly reduced.

**Table 1-2**

| Composition | Examples | | | | | | | |
|---|---|---|---|---|---|---|---|---|
| | 8 | 9 | 10 | 11 | 12 | 13 | 14 | 15 |
| PHBH-BP330 | 50 | 80 | 100 | | | | | |
| PHBH-BP350 | 50 | 20 | | | | 50 | | 30 |
| PHBV | | | | 100 | 50 | 50 | | 40 |
| P34HB | | | | | 45 | | 50 | 40 |
| PHBO | | | | | | | 50 | |
| P3HB3HV3HH | | | | | 5 | | | |
| Erucamide | 2 | 0.8 | 1.4 | | | | | |
| Oleamide | | | | | | 1.5 | 0.7 | |
| Linoleamide | | | | | 0.9 | | | 1.8 |
| Palmitamide | | | | 2 | | | | |

| Process Parameters | | | | | | | | |
|---|---|---|---|---|---|---|---|---|
| The second temperature of pelletization (°C) | 60 | 55 | 65 | 60 | 53 | 45 | 55 | 50 |

| Physical Properties Parameters | | | | | | | | |
|---|---|---|---|---|---|---|---|---|
| Difficulty in processing molded bodies (pellets) | △ | △ | △ | △ | △ | △ | □ | △ |
| Degree of crystallinity (%) | 21.33 | 26.1 | 3.15 | 30.14 | 19.32 | 16.34 | 0.78 | 3.06 |
| Half-peak width of secondary heating cold crystallization (°C) | 13.14 | 13.43 | 10.33 | 9.33 | 13.45 | 16.44 | 23.15 | 19.32 |
| Melt flow rate (g/10min) | 3.89 | 5.1 | 3.65 | 7.01 | 10.32 | 8.14 | 7.32 | 6.13 |
| Tensile strength (Mpa) | 22.1 | 23.2 | 30.2 | 16.54 | 19.32 | 20.16 | 18.01 | 17.34 |
| Elongation at break (%) | 19 | 23 | 4 | 37 | 119 | 18 | 98 | 134 |

**Table 1-3**

| Composition | Comparative Examples | | | |
|---|---|---|---|---|
| | 1 | 2 | 3 | 4 |
| PHBH-BP350 | 100 | 100 | 100 | 100 |
| Erucamide | | 0.2 | 2.5 | |
| Silicon dioxide | | | | 0.5 |

| Process Parameters | | | | |
|---|---|---|---|---|
| The second temperature of pelletization (°C) | 45 | 45 | 45 | 45 |

| Physical Properties Parameters | | | | |
|---|---|---|---|---|
| Difficulty in processing molded bodies (pellets) | × | × | △ | × |
| Degree of crystallinity (%) | 0.81 | 1.01 | 3.98 | 5.33 |
| Half-peak width of secondary heating cold crystallization (°C) | 27.61 | 22.54 | 13.23 | 18.71 |
| Melt flow rate (g/10min) | 14.78 | 10.32 | 5.33 | 6.23 |
| Tensile strength (MPa) | 22.8 | 22.5 | 20.4 | 21.7 |
| Elongation at break (%) | 6 | 10 | 21 | 8 |

In order to further explore the improvement of processing efficiency while reducing the difficulty of processing, the present invention has found that after compounding the nucleating agent and the fatty acid amide, there is no need to set the second temperature during processing, and crystallization can be performed at RT, so that the processing difficulty is reduced, the processing efficiency is improved and the energy consumption is reduced. The specific compound composition and processing method were as follows:
The polyhydroxyalkanoate compositions provided in Examples 16-25 and 26-30 in Tables 1-4 and 1-5 were prepared into polyhydroxyalkanoate molded bodies (pellets), and the preparation method was as follows:
The polyhydroxyalkanoate composition was placed in a high-speed mixer at RT and co-mixed for 3 to 10 min using a speed of 100 to 600 r/min;
The mixed material was placed in the discharge hopper or loss-in-weight feeder of a twinscrew extruder (JSH-65, Nanjing Mianya Machinery Manufacturing Co. Ltd.); the temperature of the extrusion pelletization equipment was set within the range of 50-180°C, the rotating speed of the main engine was 50 to 600 r/min, and the feeding amount or capacity was to be adjusted according to the actual production state; subsequently, pelletization was carried out by way of pelletizing using air-cooled strand pelletizing, water bath strand pelletizing, grinding and hot cutting, water ring cutting or underwater pelletizing at RT (i.e., the second temperature of pelletization is RT).

The polyhydroxyalkanoate compositions provided by Comparative Examples 5 and 6 in Table 1-4 only contain polyhydroxyalkanoate and nucleating agent, and Comparative Examples 7 and 8 in Table 1-5 use other alcohol substances as comparison, such as sorbitol in sugar alcohol substances and 1,4-cyclohexanediol in cyclic alcohol substances, which are prepared into a polyhydroxyalkanoate molded bodies (pellets) in the following manner:
The polyhydroxyalkanoate composition was placed in a high-speed mixer at RT and co-mixed for 3 to 10 min using a speed of 100 to 600 r/min;
The mixed material was placed in the discharge hopper or loss-in-weight feeder of a twinscrew extruder (JSH-65, Nanjing Mianya Machinery Manufacturing Co. Ltd.); the temperature of the extrusion pelletization equipment was set within the range of 50-180°C, the rotating speed of the main engine was 50 to 600 r/min, and the feeding amount or capacity was to be adjusted according to the actual production state; subsequently, pelletization was carried out by way of pelletizing using air-cooled strand pelletizing, water bath strand pelletizing, grinding and hot cutting, water ring cutting or underwater pelletizing; in the process of production and processing, the water bath condition was maintained at 45-65°C (i.e., the second temperature of pelletization, in Comparative Examples 5, 7 and 8, 45°C was used, and in Comparative Example 6, 55°C was used); and the prepared pellets were dried using a blast drying oven to eliminate the influence of moisture on the properties of the pellets and at the same time to crystallize the pellets completely.

Specific process parameters and Physical Properties Parameters of the obtained pellets were shown in Tables 1-4 and 1-5.

By comparing Tables 1-1, 1-2, 1-3, 1-4 and 1-5, it can be seen that compared with the Comparative Examples 5 and 6 where only nucleating agent was added, the Examples 16-25 and 26-30 where fatty acid amide was also added were more effective and have higher nucleation efficiency. In addition, for the solutions of adding only nucleating agents, the present invention further compares whether other types of alcohols also have nucleating effect, and it can be seen that Comparative Examples 7-8 use sorbitol and 1,4 cyclohexanediol, which obviously have no nucleating effect; when only fatty acids and fatty alcohols mentioned in the present invention are used as nucleating agents, for example, in Comparative Example 5, only 1% of the nucleating agent, behenic acid was added, and compared with Example 16, in which 1% of the nucleating agent, behenic acid and 1% of erucamide were added together, the processability of Comparative Example 5 is poor, and the numerical index of degree of crystallinity of Example 16 is better than that of Comparative Example 5. Comparative Example 6 has poor processability and low degree of crystallinity compared with Example 17.

The nucleating agent of the present invention can be selected from conventional organic/inorganic nucleating agents in the field, including but not limited to talcum powder, calcium carbonate, silicon dioxide, alum, titanium dioxide, calcium oxide, magnesium oxide, carbon black, mica and the like.

The present invention has found that fatty acids and/or fatty alcohols can be used as nucleating agents (for example, behenic acid in Examples 16 and 22, docosanol in Example 17, tetracosanoic acid and stearic acid in Example 18, cerotic acid in Example 19, behenic acid and stearic acid in Example 20, behenic acid and docosanol in Example 21, docosanol and octadecyl alcohol in Example 23, octadecyl alcohol and dodecanol in Example 24, stearic acid and docosanol in Example 25, and short-chain fatty acids, fatty alcohols such as valeric acid, decanoic acid, pentanol, and C8 alcohol were used in Examples 26 to 30). More preferably, erucamide was combined with behenic acid and/or docosanol (e.g. Examples 16, 17 and 21), and the addition amount of erucamide was 0.5% to 2% of the mass of polyhydroxyalkanoate. As shown in Examples 16 to 25, after the nucleating agent and fatty acid amide are compounded, there is no need to set the second temperature during processing. In Tables 1-4 and 1-5, the second pelletization temperature (°C) of Examples 16 to 25 and 26 to 30 is RT, that is, the molded bodies in Examples can crystallize at RT, which reduces the processing difficulty, improves the processing efficiency and reduces energy consumption.

Although the short-chain fatty acids and fatty alcohols used in Examples 26 to 30 can be effectively crystallized after compounding with crystallization accelerators without the use of a second crystallization temperature (wherein the second crystallization temperature is RT), the crystallization effect was lower than that of Examples 16 to 25 in which the long-chain fatty acids and fatty alcohols are used. For example, the degree of crystallinity of Examples 27 and 28 is lower than that of Example 21, and the degree of crystallinity of Examples 29 and 30 is lower than that of Examples 22 and 23.

It was also found through study that when the dosage of fatty acid amide as crystallization accelerator is increased, the addition amount of nucleating agent will be affected. Specifically, when the dosage of fatty acid amide is increased, the addition amount of nucleating agent can be reduced, and the degree of crystallinity of the molded body can be maintained or increased obviously. For example, in Example 17, the ratio of fatty acid amide to nucleating agent was 1:3, and the degree of crystallinity thereof was 5.11%; the ratio of fatty acid amide to nucleating agent in Example 21 was 2:1.5, and the degree of crystallinity thereof was 24.32%. Similarly, the ratio of fatty acid amide to nucleating agent in Example 18 was 0.5:2.5, and the degree of crystallinity thereof was 37.12%. The ratio of fatty acid amide to nucleating agent in Example 22 was 2: 1, and the degree of crystallinity thereof was 45.32%.

**Table 1-4**

| Composition | Examples | | | | | | | | | | Comparative Examples | |
|---|---|---|---|---|---|---|---|---|---|---|---|---|
| | 16 | 17 | 18 | 19 | 20 | 21 | 22 | 23 | 24 | 25 | 5 | 6 |
| PHBH-BP330 | | | | 100 | | | 100 | 50 | | 20 | | |
| PHBH-BP350 | 100 | 100 | 100 | | 90 | 80 | | 50 | | 80 | 100 | 100 |
| PHBV | | | | | | | | | 100 | | | |
| P34HB | | | | | | 10 | | | | | | |
| PHBO | | | | | | 10 | | | | | | |
| P3HB3HV3HH | | | | | 10 | | | | | | | |
| Erucamide | 1 | 1 | 0.5 | 0.5 | | | | | | | | |
| Oleamide | | | | 0.5 | | | | | 0.7 | 2 | | |
| Linoleamide | | | | | 1 | | 0.5 | | | | | |
| Palmitamide | | | | | | 2 | 1.5 | 1.5 | | | | |
| Behenic acid | 1 | | | | 1 | 0.5 | | | | | 1 | |
| Tetracosanoic acid | | | 2 | | | | | | | | | |
| Cerotic acid | | | | 1 | | | | | | | | |
| Stearic acid | | | 0.5 | | 0.5 | | | | | 0.5 | | |
| Docosanol | | 3 | | | | 1 | 1 | 2 | | 1 | | 3 |
| Octadecyl alcohol | | | | | | | | 1 | 1 | | | |
| Dodecanol | | | | | | | | | 0.5 | | | |

| Parameters of Process | | | | | | | | | | | | |
|---|---|---|---|---|---|---|---|---|---|---|---|---|
| The second temperature of pelletization (°C) | RT | RT | RT | RT | RT | RT | RT | RT | RT | RT | 45 | 55 |

| Physical Properties Parameters | | | | | | | | | | | | |
|---|---|---|---|---|---|---|---|---|---|---|---|---|
| Difficulty in processing molded bodies (pellets) | ○○ | ○○ | ○○ | ○○ | ○○ | ○○ | ○○ | ○○ | ○○ | ○○ | ○ | ○ |
| Degree of crystallinity (%) | 21.32 | 5.11 | 37.12 | 20.45 | 18.32 | 24.32 | 45.32 | 28.1 | 52.1 | 39.13 | 20.31 | 3.66 |
| Half-peak width of secondary heating cold crystallization (°C) | 11.31 | 6.03 | 8.13 | 14.13 | 13.34 | 13.21 | 9.8 | 10.0 | 2.01 | 4.58 | 11.91 | 6.55 |
| Melt flow rate (g/10min) | 2.99 | 3.23 | 2.01 | 3.45 | 4.16 | 4.15 | 3.01 | 3.51 | 6.10 | 4.12 | 3.15 | 3.43 |
| Tensile strength (Mpa) | 23.4 | 22.9 | 23.1 | 21.5 | 19.34 | 20.14 | 32.0 | 28.1 | 17.31 | 24.90 | 23.2 | 23.7 |
| Elongation at break (%) | 14 | 41 | 20 | 16 | 38 | 16 | 3 | 7 | 41 | 9 | 15 | 34 |

**Table 1-5**

| Composition | Example | Example | Example | Example | Example | Comparativ e Example | Comparativ e Example |
|---|---|---|---|---|---|---|---|
| | 26 | 27 | 28 | 29 | 30 | 7 | 8 |
| PHBH-BP350 | 100 | 100 | 100 | 100 | 100 | 100 | 100 |
| Erucamide | 0.5 | 1 | 2 | 1.5 | | | |
| Oleamide | | | | | 2 | | |
| Valeric acid | 1 | | | | | | |
| Decanoic acid | | 1 | 3 | | | | |
| Pentanol | | | | 1 | | | |
| C8 alcohol | | | | | 1 | | |
| Sorbitol | | | | | | 1 | |
| 1,4-Cyclohexanediol | | | | | | | 1 |
| The second temperature of pelletization (°C) | RT | RT | RT | RT | RT | 45 | 45 |
| Difficulty in processing molded bodies (pellets) | ○○ | ○○ | ○○ | ○○ | ○○ | × | × |
| Degree of crystallinity (%) | 9.78 | 11.12 | 13.99 | 12.89 | 4.54 | 0.73 | 1.81 |
| Half-peak width of secondary heating cold crystallization (°C) | 15.33 | 12.14 | 10.13 | 11.32 | 13.35 | 17.13 | 21.31 |
| Melt flow rate (g/10min) | 4.55 | 4.31 | 3.41 | 5.10 | 4.83 | 16.13 | 13.01 |
| Tensile strength (Mpa) | 22.8 | 23.6 | 23.9 | 23.7 | 23.3 | 21.03 | 20.13 |
| Elongation at break (%) | 22 | 45 | 47 | 43 | 36 | 43 | 21 |

In order to explore the influence of polyhydroxyalkanoate composition on the performance of other molded bodies, this example also includes:

### 2. Preparation of polyhydroxyalkanoate molded body thin film):

In Examples 31 to 35, the polyhydroxyalkanoate composition pellets of Examples 1, 2, 16, 17 and 25 were blown into film and molded, respectively, and the blow molding steps were as follows:
The polyhydroxyalkanoate composition pellets were placed into a film blowing machine (SD 50-65, Wenzhou Zhengchang Machinery Co., Ltd.), and the temperature of the screw and the die was set within 50-180°C (film blowing processing temperature); the prepared thin film was crystallized on-line at RT by using a drying channel before winding; and the thin film molded body with a same thickness was prepared. The uniformly prepared thickness in the present invention was 0.4 mm.

In Comparative Examples 9 to 13, the polyhydroxyalkanoate composition pellets of Comparative Examples 1, 2, 3, 5 and 6 were blown into film and molded, respectively, and the blow molding steps were as follows:
The polyhydroxyalkanoate composition pellets were placed into a film blowing machine (SD 50-65, Wenzhou Zhengchang Machinery Co., Ltd.), and the temperature of the screw and the die was set within 50-180°C (film blowing processing temperature); the prepared thin film was crystallized on-line by using a drying channel (the drying channel temperature of 45°C) before winding; and the thin film molded body with a same thickness was prepared. The uniformly prepared thickness in the present invention was 0.4 mm.

See Table 2 for specific process parameters and physical properties parameters of the obtained thin film.

**Table 2**

| Composition | Example | | | | | Comparative Example | | | | |
|---|---|---|---|---|---|---|---|---|---|---|
| | 31 | 32 | 33 | 34 | 35 | 9 | 10 | 11 | 12 | 13 |
| Source of the raw materials | Example | | | | | Comparative Example | | | | |
| | 1 | 2 | 16 | 17 | 25 | 1 | 2 | 3 | 5 | 6 |
| Process Parameters | | | | | | | | | | |
| Film blowing processing temperature (°C) | 50-160 | 50-160 | 50-160 | 50-160 | 80-180 | 50-160 | 50-160 | 50-160 | 50-160 | 50-160 |
| The second film blowing processing temperature (°C) | RT | RT | RT | RT | RT | 45 | 45 | 45 | 45 | 45 |

| Physical Properties Parameters | | | | | | | | | | |
|---|---|---|---|---|---|---|---|---|---|---|
| Longitudinal tensile strength of the thin film (Mpa) | 21.45 | 23.2 | 22.67 | 23.6 | 25.31 | Unable to test | Unable to test | 21.6 | 23.15 | 22.8 |
| Longitudinal elongation at break of the thin film (%) | 21 | 25 | 19 | 158 | 12 | Unable to test | Unable to test | 23 | 31 | 115 |

As can be seen from the results in Table 2, for film blowing processing, the thin films can be prepared by adding erucamide alone in Examples 31 to 32 and erucamide compound nucleating agent in Examples 33 to 35, and the quality is good; Comparative Examples 9 and 10 were unable to prepare into thin films because erucamide was not added or the addition amount was too small; Comparative Examples 11 to 13, although capable of preparing into thin films, require conventional setting of the second processing temperature; however, in Examples 31 to 35, the thin films can be prepared at RT without setting the second temperature.

In summary, by adding various fatty acid amides to a single polyhydroxyalkanoate or a mixture of polyhydroxyalkanoates, Examples 1 to 15 can all promote crystallization, and it can be known that crystallization can be promoted by adding fatty acid amide compounds to the polyhydroxyalkanoate composition in the present invention, thus solving the problem that the polyhydroxyalkanoate resin adheres to processing equipment parts such as a mold, a press roller, a cutter, a guide roller and the like in the process of processing the polyhydroxyalkanoate molded body in the prior art, and improves the processing efficiency.

Further, by comparing Examples 16 to 25 and 26 to 30 with Examples 1 to 15, it is clear that the nucleating agent, fatty acid and/or fatty alcohol, is added on the basis that the polyhydroxyalkanoate composition comprising the crystallization accelerator fatty acid amide, so that the nucleation efficiency is higher and the processing difficulty of the molded body is lower. Moreover, there is no need to set the second temperature in the production process, that is, the molded body with good molding state can be obtained at RT after extrusion, which can not only improve the processing efficiency but also reduce the production energy consumption for mass production. When the polyhydroxyalkanoate composition of the present invention is prepared into molded bodies, which is not limited to molded bodies such as pellets, thin film, straws, injection molded parts and the like, and in the process of preparing molded bodies, the problem of easy adhesion in the preparation process can be effectively solved by adopting the processing and molding methods (heating and melting at the first temperature and crystallizing and molding at the second temperature) generally used in the field; at the same time, for the composition added with fatty acid or/and fatty alcohol nucleating agent, there is no need to set a second temperature in the preparation process, so that non-adhesion can be achieved while the processing energy consumption can be reduced.

### Industrial applicability

The present invention provides a polyhydroxyalkanoate composition comprising a crystallization accelerator and a molded body, by selecting fatty acid amide as the crystallization accelerator of polyhydroxyalkanoate, provides a certain time guarantee for the crystallization of the molded body, promotes the crystallization and molding of polyhydroxyalkanoate, and at the same time, solves the problem that the polyhydroxyalkanoate resin is easily adhered to processing equipment parts such as a mold, a press roller, a cutter, a guide roller and the like in the process of processing the polyhydroxyalkanoate molded body in the prior art, and improves the processing efficiency of preparing the molded body. In addition, the crystallization accelerator of the present invention has wide sources and low product price, which reduces the raw material cost of various molded bodies; the nucleating agent is of biological origin, which does not affect the biological carbon proportion of polyhydroxyalkanoate molded body, and it can still reach 100% biological origin. The polyhydroxyalkanoate composition provided by the present invention uses nucleating agents which are more suitable for processing different molded bodies, has the characteristics of high nucleating efficiency and simpler processing mode, and has wide application scenarios.

## Claims

1. A polyhydroxyalkanoate composition comprising a crystallization accelerator, **characterized by** comprising polyhydroxyalkanoate and a crystallization accelerator, wherein the crystallization accelerator is one or more selected from erucamide, oleamide, linoleamide and palmitamide;
the polyhydroxyalkanoate composition further comprises a nucleating agent, wherein the nucleating agent is fatty alcohol and/or fatty acid.

2. The polyhydroxyalkanoate composition comprising a crystallization accelerator of claim 1, wherein, the addition amount of the crystallization accelerator is 0.01% to 20% of the mass of the polyhydroxyalkanoate; and the addition amount of the nucleating agent is 0.01% to 20% of the mass of the polyhydroxyalkanoate.

3. The polyhydroxyalkanoate composition comprising a crystallization accelerator of claim 2, wherein, the crystallization accelerator is erucamide, and the addition amount of the erucamide is 0.5% to 2% of the mass of the polyhydroxyalkanoate.

4. The polyhydroxyalkanoate composition comprising a crystallization accelerator of any one of claims 1 to 3, wherein, the addition amount of the nucleating agent is 0.3% to 10% of the mass of the polyhydroxyalkanoate.

5. The polyhydroxyalkanoate composition comprising a crystallization accelerator of claim 4, wherein, the addition amount of the nucleating agent is 0.3% to 5% of the mass of the polyhydroxyalkanoate.

6. The polyhydroxyalkanoate composition comprising a crystallization accelerator of claim 5, wherein, the fatty acid is a fatty acid with 5 to 30 carbon atoms, comprising lauric acid, myristic acid, palmitic acid, stearic acid, arachidic acid, behenic acid, tetracosanoic acid, cerotic acid, montanic acid and melissic acid;
the fatty alcohol is a fatty alcohol with 5 to 32 carbon atoms, comprising 1,16-hexadecanediol, stearic glycol, 1,22-docosanediol, lauryl alcohol, myristic alcohol, palmityl alcohol, arachidyl alcohol, behenyl alcohol, ceryl alcohol, policosanol, triacontanol and dotriacontanol.

7. The polyhydroxyalkanoate composition comprising a crystallization accelerator of claim 1, wherein, in the polyhydroxyalkanoate composition, the polyhydroxyalkanoate is a polymer containing a structural unit represented by the following general formula (1):
[CHRCH₂COO] (1)
in the general formula (1), R represents an alkyl group represented by CpH2p+1, and p represents an integer from 1 to 15.

8. The polyhydroxyalkanoate composition comprising a crystallization accelerator of claim 7, wherein, the polyhydroxyalkanoate is at least one selected from poly(3-hydroxybutyrate), poly(3-hydroxybutyrate-co-3-hydroxypropionate), poly(3-hydroxybutyrate-co-3-hydroxyvalerate), poly(3-hydroxybutyrate-co-3-hydroxyvalerate-3-hydroxyhexanoate), poly(3-hydroxybutyrate-co-3-hydroxyhexanoate), poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3- hydroxyundecanoate) and poly(3-hydroxybutyrate-co-4-hydroxybutyrate).

9. A polyhydroxyalkanoate molded body, wherein, the polyhydroxyalkanoate molded body is prepared from a raw material comprising the polyhydroxyalkanoate composition comprising a crystallization accelerator of any one of claims 1 to 8.

10. A method for preparing a polyhydroxyalkanoate molded body, **characterized by** preparing the polyhydroxyalkanoate molded body of claim 9, comprising: cooling and molding at room temperature after heating and melting; wherein, a way of cooling and molding at room temperature includes: granulating at room temperature by the following pelletizing way: air-cooled strand pelletizing, water bath strand pelletizing, grinding and hot cutting, water ring cutting or underwater pelletizing; or, preparing a thin film by way of on-line crystallization at room temperature using a drying tunnel.

## Patentansprüche

1. Polyhydroxyalkanoat-Zusammensetzung, die einen Kristallisationsbeschleuniger umfasst, **dadurch gekennzeichnet, dass** sie Polyhydroxyalkanoat und einen Kristallisationsbeschleuniger umfasst, wobei der Kristallisationsbeschleuniger einer oder mehrere aus Erucamid, Oleamid, Linoleamid und Palmitamid ist;
wobei die Polyhydroxyalkanoatzusammensetzung ferner ein Keimbildungsmittel
umfasst, wobei das Keimbildungsmittel ein Fettalkohol und/oder eine Fettsäure ist.

2. Polyhydroxyalkanoat-Zusammensetzung umfassend einen Kristallisationsbeschleuniger nach Anspruch 1, wobei die Zugabemenge des Kristallisationsbeschleunigers 0,01 % bis 20 % der Masse des Polyhydroxyalkanoats beträgt; und die Zugabemenge des Keimbildners 0,01 % bis 20 % der Masse des Polyhydroxyalkanoats beträgt.

3. Polyhydroxyalkanoat-Zusammensetzung umfassend einen Kristallisationsbeschleuniger nach Anspruch 2, wobei der Kristallisationsbeschleuniger Erucamid ist und die Zugabemenge des Erucamids 0,5 % bis 2 % der Masse des Polyhydroxyalkanoats beträgt.

4. Polyhydroxyalkanoat-Zusammensetzung umfassend einen Kristallisationsbeschleuniger nach Anspruch 1 bis 3, wobei die Zugabemenge des Keimbildners 0,3 % bis 10 % der Masse des Polyhydroxyalkanoats beträgt.

5. Polyhydroxyalkanoat-Zusammensetzung umfassend einen Kristallisationsbeschleuniger nach Anspruch 4, wobei die Zugabemenge des Keimbildners 0,3 % bis 5 % der Masse des Polyhydroxyalkanoats beträgt.

6. Polyhydroxyalkanoat-Zusammensetzung umfassend einen Kristallisationsbeschleuniger nach Anspruch 5, wobei die Fettsäure eine Fettsäure mit 5 bis 30 Kohlenstoffatomen ist, umfassend Laurinsäure, Myristinsäure, Palmitinsäure, Stearinsäure, Arachinsäure, Behensäure, Tetracosansäure, Cerotinsäure, Montansäure und Melissinsäure;
der Fettalkohol ein Fettalkohol mit 5 bis 32 Kohlenstoffatomen ist, umfasst 1,16-Hexadecandiol, Stearinsäureglykol, 1,22-Docosandiol, Laurylalkohol, Myristylalkohol, Palmitylalkohol, Arachidylalkohol, Behenylalkohol, Cerylalkohol, Policosanol, Triacontanol und Dotriacontanol.

7. Polyhydroxyalkanoat-Zusammensetzung umfassend einen Kristallisationsbeschleuniger nach Anspruch 1, wobei in der Polyhydroxyalkanoat-Zusammensetzung das Polyhydroxyalkanoat ein Polymer ist, das eine Struktureinheit enthält, die durch die folgende allgemeine Formel (1) dargestellt wird:
[CHRCH₂ COO] (1)
wobei in der allgemeinen Formel (1) R eine Alkylgruppe darstellt, die durch CpH2p+1 dargestellt wird, und p eine ganze Zahl von 1 bis 15 darstellt.

8. Polyhydroxyalkanoat-Zusammensetzung umfassend einen Kristallisationsbeschleuniger nach Anspruch 7, wobei das Polyhydroxyalkanoat mindestens eines ist, ausgewählt aus Poly(3-hydroxybutyrat), Poly(3-hydroxybutyrat-co-3-hydroxypropionat), Poly(3-hydroxybutyrat-co-3-hydroxyvalerat), Poly(3-hydroxybutyrat-co-3-hydroxyvalerat-3-hydroxyhexanoat), Poly(3-hydroxybutyrat-co-3-hydroxyhexanoat), Poly(3-hydroxybutyrat-co-3-hydroxyheptanoat), Poly(3-hydroxybutyrat-co-3-hydroxyoctanoat), Poly(3-hydroxybutyrat-co-3-hydroxynonanoat), Poly(3-hydroxybutyrat-co-3-hydroxydecanoat), Poly(3-hydroxybutyrat-co-3-hydroxyundecanoat) und Poly(3-hydroxybutyrat-co-4-hydroxybutyrat).

9. Ein Polyhydroxyalkanoat-Formkörper, wobei der Polyhydroxyalkanoat-Formkörper aus einem Rohmaterial hergestellt wird, das die Polyhydroxyalkanoat-Zusammensetzung umfasst, die einen Kristallisationsbeschleuniger gemäß einem der Ansprüche 1 bis 8 umfasst.

10. Verfahren zur Herstellung eines Polyhydroxyalkanoat-Formkörpers, **gekennzeichnet durch** die Herstellung des Polyhydroxyalkanoat-Formkörpers nach Anspruch 9, umfassend: Kühlen und Formen bei Raumtemperatur nach Erhitzen und Schmelzen; wobei ein Verfahren zum Kühlen und Formen bei Raumtemperatur umfasst: Granulieren bei Raumtemperatur durch das folgende Pelletierverfahren: luftgekühltes Stranggranulieren, Wasserbad-Stranggranulieren, Mahlen und Heißschneiden, Wasserring-Schneiden oder Unterwassergranulieren; oder Herstellen einer dünnen Folie durch Online-Kristallisation bei Raumtemperatur unter Verwendung eines Trockentunnels.

## Revendications

1. Composition de polyhydroxyalcanoate comprenant un accélérateur de cristallisation, **caractérisée en ce qu'**elle comprend du polyhydroxyalcanoate et un accélérateur de cristallisation, dans laquelle l'accélérateur de cristallisation est un ou plusieurs éléments choisis parmi l'érucamide, l'oléamide, le linoléamide et le palmitamide ;
la composition de polyhydroxyalcanoate comprend en outre un agent nucléant, dans laquelle l'agent nucléant est un alcool gras et/ou un acide gras.

2. Composition de polyhydroxyalcanoate comprenant un accélérateur de cristallisation selon la revendication 1, dans laquelle la quantité ajoutée de l'accélérateur de cristallisation est comprise entre 0,01 % et 20 % de
la masse du polyhydroxyalcanoate ; et la quantité ajoutée de l'agent nucléant est comprise entre 0,01 % et 20 % de la masse du polyhydroxyalcanoate.

3. Composition de polyhydroxyalcanoate comprenant un accélérateur de cristallisation selon la revendication 2, dans laquelle l'accélérateur de cristallisation est l'érucamide, et la quantité ajoutée d'érucamide est comprise entre 0,5 % et 2 % de la masse du polyhydroxyalcanoate.

4. Composition de polyhydroxyalcanoate comprenant un accélérateur de cristallisation selon l'une quelconque des revendications 1 à 3, dans laquelle la quantité ajoutée de l'agent nucléant est comprise entre 0,3 % et 10 % de la masse du polyhydroxyalcanoate.

5. Composition de polyhydroxyalcanoate comprenant un accélérateur de cristallisation selon la revendication 4, dans laquelle la quantité ajoutée d'agent nucléant est comprise entre 0,3 % et 5 % de la masse du polyhydroxyalcanoate.

6. Composition de polyhydroxyalcanoate comprenant un accélérateur de cristallisation selon la revendication 5, dans laquelle l'acide gras est un acide gras comportant 5 à 30 atomes de carbone, comprenant l'acide laurique, l'acide myristique, l'acide palmitique, l'acide stéarique, l'acide arachidique, l'acide béhénique, l'acide tétracosanoïque, l'acide cérotique, l'acide montanique et l'acide mélissique ;
l'alcool gras est un alcool gras comportant 5 à 32 atomes de carbone, comprenant le 1,16-hexadécanediol, le stéarate de glycol, le 1,22-docosanediol, l'alcool laurique, l'alcool myristique, l'alcool palmitique, l'alcool arachidique, l'alcool béhénique, l'alcool cérylique, le policosanol, le triacontanol et le dotriacontanol.

7. Composition de polyhydroxyalcanoate comprenant un accélérateur de cristallisation selon la revendication 1, dans laquelle, dans la composition de polyhydroxyalcanoate, le polyhydroxyalcanoate est un polymère contenant une unité structurale représentée par la formule générale (1) suivante :
[CHRCH₂ COO] (1)
dans la formule générale (1), R représente un groupe alkyle représenté par CpH2p+1, et p représente un nombre entier compris entre 1 et 15.

8. Composition de polyhydroxyalcanoate comprenant un accélérateur de cristallisation selon la revendication 7, dans laquelle le polyhydroxyalcanoate est au moins un composé choisi parmi le poly(3-hydroxybutyrate), le poly(3-hydroxybutyrate-co-3-hydroxypropionate), le poly(3-hydroxybutyrate-co-3-hydroxyvalérate), poly(3-hydroxybutyrate-co-3-hydroxyvalérate-3-hydroxyhexanoate), poly(3-hydroxybutyrate-co-3-hydroxyhexanoate), poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate) et poly(3-hydroxybutyrate-co-4-hydroxybutyrate).

9. Corps moulé en polyhydroxyalcanoate, dans lequel le corps moulé en polyhydroxyalcanoate est préparé à partir d'une matière première comprenant la composition de polyhydroxyalcanoate comprenant un accélérateur de cristallisation selon l'une quelconque des revendications 1 à 8.

10. Procédé de préparation d'un corps moulé en polyhydroxyalcanoate, **caractérisé par** la préparation du corps moulé en polyhydroxyalcanoate selon la revendication 9, comprenant : le refroidissement et le moulage à température ambiante après chauffage et fusion ; dans lequel un moyen de refroidissement et de moulage à température ambiante comprend : la granulation à température ambiante par le moyen de pelletisation suivant : granulation par refroidissement à l'air, granulation par bain d'eau, broyage et découpe à chaud, découpe à anneau d'eau ou granulation sous eau ; ou la préparation d'un film mince par cristallisation en ligne à température ambiante à l'aide d'un tunnel de séchage.
